(19) Europäisches Patentamt
European Patent Office
Office européen des brevets

(11) **EP 4 362 148 A1**

(12) **EUROPÄISCHE PATENTANMELDUNG**

(43) Veröffentlichungstag:
**01.05.2024 Patentblatt 2024/18**

(21) Anmeldenummer: 23204375.2

(22) Anmeldetag: **18.10.2023**

(51) Internationale Patentklassifikation (IPC):
***H01M 8/18*** *(2006.01)*

(52) Gemeinsame Patentklassifikation (CPC):
**H01M 8/188**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **25.10.2022 DE 102022128209**

(71) Anmelder: **Fraunhofer-Gesellschaft zur Förderung der angewandten Forschung e.V. 80686 München (DE)**

(72) Erfinder:
• **ROZNYATOVSKAYA, Nataliya 76327 Pfinztal-Berghausen (DE)**
• **FISCHER, Peter 76327 Pfinztal-Berghausen (DE)**

(74) Vertreter: **Maiwald GmbH Elisenhof Elisenstraße 3 80335 München (DE)**

(54) **CHLORID-FREIE ELEKTROLYTZUSAMMENSETZUNG FÜR EINEN LÄNGEREN BETRIEB BEI HOHEN TEMPERATUREN (>40°C) IN VANADIUM REDOX-FLOW-BATTERIEN**

(57) Elektrolytlösung für eine Vanadium-Redox-Flow-Batterie, wobei die Elektrolytlösung Vanadium-Ionen, Sulfat-Ionen und Phosphorsäure umfasst; und wobei weiterhin die Leitfähigkeit σ der Elektrolytlösung im Bereich von 280 mS·cm-1 bis 420 mS·cm-1 liegt.

EP 4 362 148 A1

**Beschreibung**

Die vorliegende Erfindung betrifft eine Elektrolytzusammensetzung für eine Vanadium Redox-Flow-Zelle oder Batterie, welche auch bei Temperaturen über 40 °C über einen längeren Zeitraum stabil bleibt.

**Technischer Hintergrund**

Redox-Flow-Batterien (FB) werden häufig verwendet, um aus erneuerbaren Energien generierte elektrische Energie zu speichern und somit die Unstetigkeit dieser Energiequellen auszugleichen.

Das hervorstechende Merkmal von Vanadium-Redox-Flow Batterien (VFB) ist die Verwendung einer wässrigen Vanadiumsulfat-Lösung in beiden Halbzellen als Elektrolytlösung. Selbst bei einer Durchmischung der beiden Elektrolyte tritt deswegen keine Kontamination der entsprechenden Lösungen ein. Beim Entladen und Laden der Batterie wird die Eigenschaft von Vanadium ausgenutzt, Redox-Paare in den Oxidationsstufen (II) und (III), sowie (IV) und (V) auszubilden. Die Gleichgewichtsgleichung (i) beschreibt die im positiven Elektrolyten (Elektrolyt der Halbzelle für den positiven Pol) ablaufenden Oxidations- und Reduktionsreaktionen beim Laden und Entladen, und Gleichung (ii) beschreibt die im negativen Elektrolyten (Elektrolyt der Halbzelle für den negativen Pol) ablaufenden Oxidations- und Reduktionsreaktionen beim Laden und Entladen der Batterie.

$$VO^{2+} + H_2O \overset{\text{Laden}}{\underset{\text{Entladen}}{\rightleftharpoons}} VO_2^+ + 2\,H^+ + e^- \qquad (i)$$

$$V^{3+} + e^- \overset{\text{Laden}}{\underset{\text{Entladen}}{\rightleftharpoons}} V^{2+} \qquad\qquad (ii)$$

Das Patent US 4,786,567 beschreibt eine Elektrolytzusammensetzung für eine VFB bestehend aus Vanadium-Ionen, Sulfat-Ionen und Schwefelsäure.

Das Patent US 7,258,947 B2 beschreibt einen Elektrolyten, der dadurch gekennzeichnet ist, dass er Verunreinigung von Ammonium-Ionen und Silizium nur in niedrigen ppm Bereichen und Phosphorsäure als Stabilisator beinhaltet.

Ein Problem von VFBs ist die Instabilität der positiven Elektrolytlösungen (i) bei erhöhten Temperaturen. Dies liegt vornehmlich daran, dass das Divanadyl-Kation $VO_2^+$, welches in der vollgeladenen Batterie als Hauptbestandteil des positiven Elektrolyten vorliegt, nur in niedrigen Konzentrationen thermodynamisch stabil ist, und bei höheren Konzentrationen und Temperaturen über mehrere polymere Zwischenstufen als Vanadium(V)-Oxid $V_2O_5$ ausfällt, wie in der Reaktionsgleichung (iii) beschrieben.

$$2\,VO_2^+ + H_2O \rightleftharpoons V_2O_5\downarrow + 2H^+ \qquad (iii)$$

Vanadium Redox-Flow-Batterien (VFB) werden deswegen in der Regel bei Elektrolyttemperaturen in einem Temperaturbereich von 5°C bis 40°C betrieben.

Da sich der Elektrolyt in Vanadium-Redox-Flow Batterien beim Entladen je nach Strombelastung auf bis zu 50 °C erwärmen kann und auch Umgebungstemperaturen in einigen Gebieten der Welt über längere Zeit auf über 40 °C steigen können, wird in technischen Speichersystemen in Falle einer vollgeladenen Batterie der Elektrolyt aktiv gekühlt. Dies geschieht um eine irreversible Ausfällung von Vanadium(V)-Oxid zu verhindern. Diese Kühlung verringert jedoch die Gesamteffizienz des Speichersystems.

Bisherige Lösungsansätze für die Stabilisierung der Elektrolytlösung bei erhöhten Temperaturen befassten sich mit der Zugabe von Additiven zu der Elektrolytlösung.

Die Stabilisierung der Divanadyl-Kation $VO_2^+$ durch Chlorid-Ionen ist bekannt aus dem Patent US 9,819,039 B2, sowie aus den Publikationen L. Li, S. Kim, W. Wang, M. Vijayakumar, Z. Nie, Baowei Chen, J. Zhang, G. Xia, J. Hu, G. Graff, J. Liu, Z. Yang, Adv. Energy Mater. 2011, 1, 394-400 und M. Vijayakumar et al., Chem. Plus Chem. 2015,80, 428 - 437.

Weitere Additive für Vanadium-Elektrolytlösungen werden in den Patenten US 6,562,514 B1 und US 10,673,090 B2 offenbart.

Das Patent US 6,468,688 B2 beschreibt eine Vanadium-Elektrolytlösung, die durch Additive wie Kaliumsulfat, Natriumhexametaphosphat und Polyakrylsäure stabilisiert wird, jedoch nur eine Verwendung bei einer Temperatur über 35 °C erlaubt.

Ein Nachteil der Zugabe von Additiven, wie zum Beispiel Chlorid-Ionen zu der Elektrolytlösung für eine Vanadium-Redox-Flow Batterie ist die Änderung der Elektrolytzusammensetzung durch Oxidation (Chlorentwicklung) oder Degradation des Additives bei einem Betrieb über einen längeren Zeitraum.

Ein weiteres Problem der Vanadiumsulfat Elektrolytlösungen für VFBs ist, dass die genaue tatsächliche Zusammensetzung der Elektrolytlösung nicht direkt bestimmt werden kann.

Die Elektrolytlösung für all-Vanadium Redox-Flow-Batterien besteht in kommerziellen Anlagen aus einer 1:1 molaren Mischung von Vanadium(III) und Vanadium(IV)-Ionen, wobei die Gesamtvanadium-Ionen Konzentrationen je nach Hersteller in den Elektrolytlösungen zwischen 1,5-1,8 mol·L$^{-1}$ liegen. Die Lösungen werden durch das Lösen von Vanadium-Oxiden in mittelkonzentrierter Schwefelsäure (3-5 mol·L$^{-1}$) erhalten, so dass die Konzentration der "freien" Schwefelsäure in den Elektrolytlösungen ungefähr bei 1,7-2,5 mol·L$^{-1}$ liegt. Die genaue tatsächliche Zusammensetzung der dissoziierten Säure in einem Elektrolyten kann jedoch nicht direkt ermittelt werden, da die Anionen, je nach Herstellungsprozess durch chemische oder elektrochemische-Auflösung, als eine Mischung aus Sulfaten und Hydrogensulfat vorliegen und Nebenreaktionen, wie z.B. einer Dimerisierung der Vanadiumspezies, die Protonen Konzentration beeinflussen. Lediglich die Gesamtsulfat-Ionen Konzentration kann experimentell ermittelt werden.

Auch wenn die Konzentration der "freien" Säure in den Elektrolytlösungen praktisch nicht messbar ist, kann als Bewertungskriterium die Elektrolytleitfähigkeit $\sigma$ verwendet werden. Die Leitfähigkeit der Elektrolyten ist ein messbarer Parameter, der bei konstanten Gesamtvanadium- und Gesamtsulfat Konzentrationen proportional zur Konzentration der "freien" Säure im Elektrolyten ist. Bei einer konstanten Temperatur entspricht eine hohe Leitfähigkeit der Elektrolytlösung also einer hohen "freien" Säure Konzentration.

Eine Elektrolytzusammensetzung, die einen stabilen Vanadium-Flow-Batteriebetrieb, sowohl bei 0°C als auch bei über 40°C ermöglicht, sowie durch ihr Leitfähigkeit zur besseren Ausführbarkeit charakterisiert ist, ist erstrebenswert.

Im Zuge von intensiven Forschungsarbeiten auf diesem Gebiet wurde nun eine Elektrolytzusammensetzung gefunden, die auch bei Temperaturen über 40 °C über einen längeren Zeitraum einen stabilen Betrieb der VFB ermöglicht, ohne Chlorid als Additiv auskommt und welche dadurch gekennzeichnet ist, dass sie Vanadium-Ionen, Sulfat-Ionen und Phosphat-Ionen umfasst, wobei das Verhältnis von Vanadium-Ionen zu Sulfat-Ionen niedrig und die Leitfähigkeit der Elektrolytlösung hoch ist.

## Beschreibung der Erfindung

Die vorliegende Erfindung betrifft eine wässrige Elektrolytlösung für eine Vanadium-Redox-Flow-Batterie, dadurch gekennzeichnet, dass die Elektrolytlösung

a) Vanadium-Ionen in einer Konzentration $C_V$ im Bereich von 1,10 mol·L$^{-1}$ bis 1,70 mol·L$^{-1}$,

b) Sulfat-Ionen in einer Konzentration $C_S$ im Bereich von 4,10 mol·L$^{-1}$ bis 4,90 mol·L$^{-1}$ und

c) Phosphorsäure in einer Konzentration $C_P$ im Bereich von 0,01 mol·L$^{-1}$ bis 0,20 mol·L$^{-1}$

umfasst; und
wobei die Leitfähigkeit $\sigma$ der Elektrolytlösung im Bereich von 280 mS·cm$^{-1}$ bis 420 mS·cm$^{-1}$ liegt.

Eine wässrige Lösung im Sinne der vorliegenden Erfindung ist eine homogene Lösung, die Wasser und darin gelöste Stoffe, Flüssigkeiten und Gase umfasst.

Die erfindungsgemäße Elektrolytlösung kann durch das Mischen der entsprechenden Mengen an Vanadium Sulfaten, Schwefelsäure und Phosphorsäure erhalten werden. Bevorzugt wird die erfindungsgemäße Elektrolytlösung durch Zugabe von Schwefelsäure und/oder Phosphorsäure zu, und/oder durch Verdünnung mit Wasser von kommerziellen, wässrigen Vanadium Elektrolytlösungen erhalten.

Kommerzielle Vanadium Elektrolytlösungen werden üblicherweise durch Lösen von Vanadium-Oxiden in mittelkonzentrierter Schwefelsäure (3-5 mol·L$^{-1}$) hergestellt.

Die Sulfat-Ionen in diesen Lösungen stammen deswegen im Wesentliches von Vanadium Sulfaten und der restlichen "freien" Schwefelsäure. Da die Elektrolytlösungen je nach Hersteller und Art der Herstellung stark in ihrer genauen Zusammensetzung der Vanadium-und Sulfat-Ionen schwanken, müssen die Vanadium-Ionen und Sulfat-Ionen Konzentrationen experimentell ermittelt werden. Erst dadurch können die genauen, benötigten Mengen an Schwefelsäure und Wasser berechnet werden, um zu den gewünschten Konzentrationen der erfinderischen Elektrolytlösungen zu gelangen.

Die hohe Konzentration an Schwefelsäure, welche indirekt durch die hohe Leitfähigkeit der Elektrolytlösungen gemessen wird, führt dazu, dass es durch den niedrigeren pH-Wert zu einer besseren Stabilisierung des Divanadyl-Kations kommt und durch die hohe Konzentration an Sulfat-Ionen die Vanadium Spezies durch Komplexbildung stabilisiert werden.

Die Elektrolytlösung der vorliegenden Erfindung umfasst Sulfat-Ionen in einer Konzentration Cs im Bereich von 4,10 mol·L$^{-1}$ bis 4,90 mol·L$^{-1}$, bevorzugt im Bereich von 4,20 mol·L$^{-1}$ bis 4,80 mol·L$^{-1}$, und besonders bevorzugt im Bereich von 4,30 mol·L$^{-1}$ bis 4,70 mol·L$^{-1}$.

Üblicherweise liegen die Vanadium Konzentrationen der kommerziellen Elektrolytlösungen zwischen 1,5 - 1,8 mol·L$^{-1}$. In der vorliegenden Erfindung umfasst die Elektrolytlösung Vanadium-Ionen in einer Konzentration Cv im Bereich von 1,10 mol·L$^{-1}$ bis 1,70 mol·L$^{-1}$, bevorzugt im Bereich von 1,20 mol·L$^{-1}$ bis 1,60 mol·L$^{-1}$, und besonders bevorzugt im Bereich von 1,30 mol·L$^{-1}$ bis 1,50 mol·L$^{-1}$.

Die geringere Vanadium-Ionen Konzentration erhöht die Temperaturstabilität der geladenen Elektrolytlösung, da die Stabilität des Divanadyl-Kations $VO_2^+$ konzentrationsabhängig ist

Die hohe Sulfat-Ionen Konzentration und die geringere Vanadium-Ionen Konzentration führen zu einem relativ kleinen Verhältnis der Vanadium-Ionen Konzentration Cv zur Sulfat-Ionen Konzentration Cs (Cv/Cs). In einer bevorzugten Ausführung der Elektrolytlösung liegt das Verhältnis Cv/Cs im Bereich von 0,27 bis 0,33. In einer besonders bevorzugten Ausführung der Elektrolytlösung liegt das Verhältnis Cv/Cs im Bereich von 0,29 bis 0,32.

Als weiterer Parameter für die Charakterisierung der Elektrolytlösungen wird die Leitfähigkeit σ gemessen. Dadurch kann indirekt eine Aussage über die "freie" Schwefelsäure Konzentration gemacht und die erfinderische Elektrolytlösung charakterisiert werden. Elektrolytzusammensetzungen, welche die offenbarten Vanadium-Ionen, Sulfat-Ionen und Phosphorsäure Konzentrationen umfassen, jedoch eine niedrigere Leitfähigkeit (≙ weniger "freie" Schwefelsäure) besitzen, weil die Sulfat-Ionen Konzentration durch Zugabe von anderen Sulfat Salzen wie z.B. Ammoniumsulfat erhöht wurde, können somit von der erfinderischen Elektrolytlösung unterschieden werden. Die Leitfähigkeit σ der erfinderischen Elektrolytlösung liegt im Bereich von 280 mS·cm$^{-1}$ bis 420 mS·cm$^{-1}$, bevorzugt im Bereich von 310 mS·cm$^{-1}$ bis 390 mS·cm$^{-1}$, und besonders bevorzugt im Bereich von 330 mS·cm$^{-1}$ bis 380 mS·cm$^{-1}$.

Durch die Zugabe einer berechneten Menge an Phosphorsäure zu der Elektrolytlösung, kann die gewünschte Phosphorsäure Konzentration in der Elektrolytlösung eingestellt werden. Phosphorsäure verhindert das Polymerisieren von Vanadiumpentoxid $V_2O_5$, indem sie durch die Bildung von Phosphato-Vanadatverbindungen die Polymerisation bei einem gewissen Polymerisierungsgrad stoppt.

Die Elektrolytlösung nach der vorliegenden Erfindung umfasst Phosphorsäure in einer Konzentration $C_P$ im Bereich von 0,01 mol·L$^{-1}$ bis 0,20 mol·L$^{-1}$, bevorzugt im Bereich von 0,05 mol·L$^{-1}$ bis 0,15 mol·L$^{-1}$, wobei die Konzentration $C_P$ in der Elektrolytlösung indirekt über die Menge der zugegebenen Phosphorsäure bestimmt ist.

Dementsprechend betrifft die vorliegende Erfindung eine wässrige Elektrolytlösung für eine Vanadium-Redox-Flow-Batterie, dadurch gekennzeichnet, dass die Elektrolytlösung

a) Vanadium-Ionen in einer Konzentration $C_V$ im Bereich von 1,10 mol·L$^{-1}$ bis 1,70 mol·L$^{-1}$,

b) Sulfat-Ionen in einer Konzentration $C_S$ im Bereich von 4,10 mol·L$^{-1}$ bis 4,90 mol·L$^{-1}$ und

c) Phosphorsäure in einer Konzentration $C_P$ im Bereich von 0,01 mol·L$^{-1}$ bis 0,20 mol·L$^{-1}$

umfasst; und

wobei die Leitfähigkeit σ der Elektrolytlösung im Bereich von 280 mS·cm$^{-1}$ bis 420 mS·cm$^{-1}$ liegt;
wobei die Vanadium-Ionen Konzentration Cv, Sulfat-Ionen Konzentration Cs und die Leitfähigkeit σ durch direktes Messen der Elektrolytlösung und die Konzentration der Phosphorsäure $C_P$ indirekt über die Menge der zugegebenen Phosphorsäure bestimmt werden.

Kombinationen aus bevorzugten und nicht bevorzugten Konzentrationen, Verhältnissen und Leitfähigkeiten der Elektrolytlösungen sind im Sinne der vorliegenden Erfindung umfasst.

In einer erfindungsgemäßen Ausführung umfasst die Elektrolytlösung Vanadium-Ionen in einer Konzentration Cv im Bereich von 1,30 mol·L$^{-1}$ bis 1,50 mol·L$^{-1}$ und ein Verhältnis Cv/Cs im Bereich von 0,27 bis 0,33.

In einer weiteren Ausführung umfasst die Elektrolytlösung Vanadium-Ionen in einer Konzentration $C_V$ im Bereich von 1,30 mol·L$^{-1}$ bis 1,50 mol·L$^{-1}$ und Sulfat-Ionen in einer Konzentration $C_S$ im Bereich von 4,30 mol·L$^{-1}$ bis 4,70 mol·L$^{-1}$.

In einer weiteren Ausführung umfasst die Elektrolytlösung Sulfat-Ionen in einer Konzentration Cs im Bereich von 4,30 mol·L$^{-1}$ bis 4,70 mol·L$^{-1}$ und ein Verhältnis Cv/Cs im Bereich von 0,27 bis 0,33.

Eine bevorzugte Ausführung der Elektrolytlösung umfasst

a) Vanadium-Ionen in einer Konzentration $C_V$ im Bereich von 1,30 mol·L$^{-1}$ bis 1,50 mol·L$^{-1}$,

b) Sulfat-Ionen in einer Konzentration Cs im Bereich von 4,30 mol·L$^{-1}$ bis 4,70 mol·L$^{-1}$ und

c) Phosphorsäure in einer Konzentration $C_P$ im Bereich von 0,05 mol·L$^{-1}$ bis 0,15 mol·L$^{-1}$;

und besitzt eine Leitfähigkeit $\sigma$ im Bereich von 310 mS·cm$^{-1}$ bis 390 mS·cm$^{-1}$.

Eine besonders bevorzugte Ausführung der Elektrolytlösung umfasst

a) Vanadium-Ionen in einer Konzentration Cv von 1,40 mol·L$^{-1}$,

b) Sulfat-Ionen in einer Konzentration Cs von 4,40 mol·L$^{-1}$ und

c) Phosphorsäure in einer Konzentration $C_P$ von 0,10 mol·L$^{-1}$;

und besitzt eine Leitfähigkeit $\sigma$ von 340 mS·cm$^{-1}$.

Die erfindungsgemäße Elektrolytlösung wurde vorrangig entwickelt, um in einer Vanadium-Redox-Flow-Batterie verwendet zu werden. Deswegen betrifft die vorliegende Erfindung eine Vanadium-Redox-Flow-Batterie, dadurch gekennzeichnet, dass sie eine der erfindungsgemäßen Elektrolytlösungen umfasst.

Die Elektrolytlösung kann dabei sowohl in der Halbzelle mit positiven Pol, der Halbzelle mit negativen Pol, als auch für beide Halbzellen verwendet werden.

Die hohe thermische Stabilität der entwickelten Elektrolytlösung ermöglicht einen Betriebstemperaturbereich der entsprechenden Vanadium-Redox-Flow Batterie von 0 °C bis 60 °C.

Da beim Entladen der Vanadium-Redox-Flow Batterie eine Wärmeentwicklung stattfindet, ist eine hohe, mögliche Betriebstemperatur von großer Wichtigkeit, um einen langen Betrieb des Systems zu gewährleisten.

**Experimentalteil**

**Messmethoden:**

*Bestimmung der Vanadium-Ionen und Sulfat-Ionen Konzentrationen*

Die Vanadium-Ionen Konzentration $C_V$ und das molare Verhältnis der Vanadium-Ionen in verschiedenen Oxidationsstufen wurden durch eine potentiometrische Titration mit einer 0.1 M Cer(IV) Sulfat Standardlösung (Carl-Roth, Germany) bestimmt. Die Titration wurde mit einem automatische Titrator T70 (Mettler Toledo Int. Inc., Germany) durchgeführt.

Ein klassisches, gravimetrisches Verfahren basierend auf dem Ausfällen mit Bariumchlorid wurde benutzt, um die Sulfat-Ionen Konzentration Cs zu bestimmen.

*Messmethode zur Bestimmung der Leitfähigkeit $\sigma$*

Die Leitfähigkeit $\sigma$ der Elektrolytlösung wurde durch eine Messung mit einer Wechselstrom-Impedanz-Technik in einer Vier-Elektroden Glass-Zelle mit einer Zellkonstante von 7,3 cm$^{-1}$ und Glaskohlenstoff- oder Graphit-Elektroden bestimmt. Die Messung von Hoch-Frequenz Widerstandswerten wurden in einem Frequenzbereich von 10 bis 100 kHz mit einem Wechselstrom AC von 10 mA und Gleichstrom DC von 0 mA durchgeführt. Eine Standardlösung mit einer Leitfähigkeit von 500 mS·cm$^{-1}$ wurde für die Kalibrierung der Zelle benutzt.

*Ex-situ Messung der Temperaturstabilität*

Die thermische Stabilität der geladenen, positiven Elektrolytlösungen wurde getestet, indem 1 mL der jeweiligen Elektrolytlösung in eine Phiole überführt und in einer Testkammer (Weiss WKL 64, Germany) einer voreingestellten Temperatur 3 Tage lang ausgesetzt wurde. Die Temperatur wurde nach je 3 Tagen schrittweise von 40 °C auf 50 °C, von 50 °C auf 55 °C, von 55 °C auf 60 °C und von 60 °C auf 65 °C erhöht und die Elektrolytlösungen nach jedem Schritt visuell auf Anzeichen von Degradation wie Niederschlag, Sedimentbildung und Farbveränderung geprüft.

*Laden der Elektrolytlösung*

Ein Galvanostatisch-potentiostatischer Modus mit einer maximalen Spannung von 1,65 V und einer maximalen Stromstärke von 3 A wurde benutzt, um eine Zelle mit Elektrolytlösung zu laden, wobei die Ladeschlussspannung für den galvanostatischen Schritt mit 75 mA·cm$^{-2}$ auf 1,65 V eingestellt wurde und dann der Abschaltstrom 10 mA·cm$^{-2}$

betrug bei einer angelegten Spannung von 1,65 V.

Im vollen Ladezustand (100%) liegen die Vanadium-Ionen der positiven Elektrolytlösung ausschließlich in der Oxidationsstufe (V) vor. Bei einem Ladezustand von 97% liegen die Vanadium-Ionen der positiven Elektrolytlösung zu 97% in der Oxidationsstufe (V) und zu 3% in der Oxidationsstufe (IV) vor.

**Herstellung der Elektrolytlösungen:**

Die Vergleichs-Vanadium-Elektrolytlösungen VE1 und VE2 wurden im Handel erhalten und bestanden aus V(III) und V(IV) Sulfaten, Schwefelsäure, Phosphorsäure und Wasser. Die Konzentration der Vanadium-Ionen Cv und der Sulfat-Ionen Cs wurde bestimmt. Die Konzentration der Phosphorsäure Cp wurde dem Datenblatt der im Handel erhaltenen Elektrolytlösungen entnommen.

*Table 1: Konzentrationen der Elektrolytlösungen VE1 und VE2.*

|  | VE1 | | VE2 | |
|---|---|---|---|---|
| Molare Zusammensetzung [%Cv] | V(III)= 48,3 | V(IV)= 51,7 | V(III)= 43,6 | V(IV)= 56,4 |
| $C_V$ [mol·L$^{-1}$] | 1,68 | | 1,56 | |
| $C_S$ [mol·L$^{-1}$] | 3,8 | | 4,0 | |
| $C_P$ [mol·L$^{-1}$] | 0,05 | | 0,1 | |

Die erfinderischen Elektrolytzusammensetzungen EE1 - EE3 wurden durch die Zugabe von Wasser, konzentrierter Schwefelsäure und konzentrierter Phosphorsäure zu der im Handel erhaltenen Vanadium-Elektrolytlösung VE1 hergestellt.

Die erfinderische Elektrolytzusammensetzung EE4 wurde durch die Zugabe von Wasser, konzentrierter Schwefelsäure und konzentrierter Phosphorsäure zu der im Handel erhaltenen Vanadium-Elektrolytlösung VE2 hergestellt.

Die Leitfähigkeiten σ der Elektrolytlösungen wurden gemessen.

*Table 2: Konzentrationen und Leitfähigkeiten der Elektrolytlösungen EE1-EE4 und VE1-VE2.*

|  | EE1 | EE2 | EE3 | EE4 | VE1 | VE2 |
|---|---|---|---|---|---|---|
| $C_V$ [mol·L$^{-1}$] | 1,43 | 1,43 | 1,32 | 1,41 | 1,68 | 1,56 |
| $C_S$ [mol·L$^{-1}$] | 4,7 | 4,7 | 4,3 | 4,5 | 3,8 | 4,0 |
| $C_P$ [mol·L$^{-1}$] | 0,05 | 0,1 | 0,1 | 0,09 | 0,05 | 0,1 |
| σ [mS·cm$^{-1}$] | 345 | 346 | 378 | 345 | 240 | 295 |

**Temperaturstabilität des positiven Elektrolyten:**

Die V(III) und V(IV)-Ionen in den Elektrolytlösungen EE1-EE4 und VE1-VE2 wurden durch Elektrolyse in die Redox-Paare V(IV) und V(V) für die positiven Elektrolytlösungen umgewandelt.

Ein Galvanostatisch-potentiostatischer Modus mit einer maximalen Spannung von 1,65 V und einer maximalen Stromstärke von 3 A wurde benutzt, um Zellen mit den jeweiligen Elektrolytlösungen in einen Ladezustand von 97% oder mehr zu versetzen, wobei die Ladeschlussspannung für den galvanostatischen Schritt mit 75 mA·cm$^{-2}$ auf 1,65 V eingestellt wurde und dann der Abschaltstrom, bei einer angelegten Spannung von 1,65 V, 10 mA·cm$^{-2}$ betrug.

Um die thermische Stabilität der geladenen, positiven Elektrolytlösungen zu testen, wurden 1 mL der jeweiligen Elektrolytlösung in eine Phiole überführt und in einer Testkammer (Weiss WKL 64, Germany) einer voreingestellten Temperatur 3 Tage lang ausgesetzt. Die Temperatur wurde nach je 3 Tagen schrittweise von 40 °C auf 50 °C, von 50 °C auf 55 °C, von 55 °C auf 60 °C und von 60 °C auf 65 °C erhöht und die Elektrolytlösungen nach jedem Schritt visuell auf Anzeichen von Degradation wie Niederschlag, Sedimentbildung und Farbveränderung geprüft.

*Table 3: Temperaturstabilitäten der geladenen Elektrolytlösungen EE1-EE4 und VE1-VE2.*

|  | EE1* | EE2* | EE3* | EE4* | VE1* | VE2* |
|---|---|---|---|---|---|---|
| Temperaturstabilität (Ladezustand) | 60 °C (98%) | 60 °C (98%) | 60 °C (99%) | 55 °C (98%) | 40 °C (99%) | 40 °C (97%) |
| Temperaturstabilität (Ladezustand) | 65 °C (80%) | 65 °C (80%) | 65 °C (80%) | 65 °C (80%) | 50 °C (80%) | 55 °C (80%) |

Die vollgeladenen (Ladezustand ≥97%) Elektrolytlösungen EE1*-EE3* zeigten nach 3 Tagen bei 60 °C und EE4* nach 3 Tagen bei 55 °C keine Anzeichen von Degradation.

Das ist eine deutliche Verbesserung gegenüber den Vergleichslösungen VE1* und VE2*, welche nur bis 40 °C stabil und bereits bei 50 °C thermisch instabil waren.

Bei einem Ladezustand von 80% zeigten die erfindungsgemäßen Elektrolytlösungen EE1*-EE4* sogar nach 3 Tagen bei 65 °C keinerlei Anzeichen von Degradation. Die Vergleichslösungen VE1* und VE2* hingegen waren bei dem gleichen Ladezustand nur bis 50 °C, beziehungsweise 55 °C stabil.

Zusätzlich zeigten die geladenen Elektrolytlösungen EE1*-EE4* keine Anzeichen von Instabilität, wie z.B. Kristallisation, bei Temperaturen bis -20°C.

Des Weiteren besitzen die Elektrolytlösungen EE1-EE4 eine höhere Leitfähigkeit und können somit die Energieeffizienz der VFBs verbessern, da weniger Energie durch ohmsche Verluste verloren geht.

**Patentansprüche**

1. Eine Elektrolytlösung für eine Vanadium-Redox-Flow-Batterie, **dadurch gekennzeichnet, dass** die Elektrolytlösung

   a) Vanadium-Ionen in einer Konzentration $C_V$ im Bereich von 1,10 mol·L$^{-1}$ bis 1,70 mol·L$^{-1}$,
   b) Sulfat-Ionen in einer Konzentration $C_S$ im Bereich von 4,10 mol·L$^{-1}$ bis 4,90 mol·L$^{-1}$ und
   c) Phosphorsäure in einer Konzentration $C_p$ im Bereich von 0,01 mol·L$^{-1}$ bis 0,20 mol·L$^{-1}$

   umfasst; und
   wobei die Leitfähigkeit $\sigma$ der Elektrolytlösung im Bereich von 280 mS·cm$^{-1}$ bis 420 mS·cm$^{-1}$ liegt.

2. Die Elektrolytlösung nach Anspruch 1, **dadurch gekennzeichnet, dass** das Verhältnis $C_V/C_S$ der Vanadium-Ionen Konzentration $C_V$ zur Sulfat-Ionen Konzentration $C_S$ im Bereich von 0,27 bis 0,33, bevorzugt im Bereich von 0,29 bis 0,32 liegt.

3. Die Elektrolytlösung nach einem der vorherigen Ansprüche, **dadurch gekennzeichnet, dass** die Konzentration $C_V$ der Vanadium-Ionen im Bereich von 1,20 mol·L$^{-1}$ bis 1,60 mol·L$^{-1}$, bevorzugt im Bereich von 1,30 mol·L$^{-1}$ bis 1,50 mol·L$^{-1}$ liegt.

4. Die Elektrolytlösung nach einem der vorherigen Ansprüche, **dadurch gekennzeichnet, dass** die Konzentration $C_S$ der Sulfat-Ionen im Bereich von 4,20 mol·L$^{-1}$ bis 4,80 mol·L$^{-1}$, bevorzugt im Bereich von 4,30 mol·L$^{-1}$ bis 4,70 mol·L$^{-1}$ liegt.

5. Die Elektrolytlösung nach einem der vorherigen Ansprüche, **dadurch gekennzeichnet, dass** die Konzentration $C_P$ der Phosphorsäure im Bereich von 0,05 mol·L$^{-1}$ bis 0,15 mol·L$^{-1}$ liegt.

6. Die Elektrolytlösung nach einem der vorherigen Ansprüche, **dadurch gekennzeichnet, dass** die Leitfähigkeit $\sigma$ der Elektrolytlösung im Bereich von 310 mS·cm$^{-1}$ bis 390 mS·cm$^{-1}$, bevorzugt im Bereich von 330 mS·cm$^{-1}$ bis 380 mS·cm$^{-1}$ liegt.

7. Eine Vanadium-Redox-Flow-Batterie, **dadurch gekennzeichnet, dass** sie die Elektrolytlösung nach einem der vorherigen Ansprüche umfasst.

8. Die Vanadium-Redox-Flow-Batterie nach Anspruch 7, **dadurch gekennzeichnet, dass** die Betriebstemperatur im Bereich von 0 °C bis 60 °C liegt.

Europäisches
Patentamt

European
Patent Office

Office européen
des brevets

# EUROPÄISCHER RECHERCHENBERICHT

**Nummer der Anmeldung**

**EP 23 20 4375**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 8 802 265 B2 (NOACK JENS [DE]; TÜBKE JENS [DE] ET AL.) 12. August 2014 (2014-08-12) | 1,2,5,7,8 | INV. H01M8/18 |
| Y | * Spalte 3, Zeile 1 – Spalte 3, Zeile 40 * ----- | 1-8 | |
| X | JP 2021 153048 A (TORAY INDUSTRIES) 30. September 2021 (2021-09-30) * Absatz [0045] * * Absatz [0081] * ----- | 1-8 | |
| X | WO 2015/025961 A1 (NEW ENERGY SUPPORT ORGANIZATION [JP]) 26. Februar 2015 (2015-02-26) * Seite 7 – Seite 8 * * Seite 12 * * Seite 13 – Seite 14 * ----- | 1,7,8 | |
| Y | US 2018/135149 A1 (ORIJI GAKU [JP] ET AL) 17. Mai 2018 (2018-05-17) * Absatz [0082] – Absatz [0086]; Beispiel 20 * ----- | 1-8 | |

**RECHERCHIERTE SACHGEBIETE (IPC)**

H01M

Der vorliegende Recherchenbericht wurde für alle Patentansprüche erstellt

| Recherchenort | Abschlußdatum der Recherche | Prüfer |
|---|---|---|
| München | 29. Februar 2024 | Wiedemann, Eric |

EPO FORM 1503 03.82 (P04C03)

# EP 4 362 148 A1

## ANHANG ZUM EUROPÄISCHEN RECHERCHENBERICHT
## ÜBER DIE EUROPÄISCHE PATENTANMELDUNG NR.

EP 23 20 4375

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-02-2024

| Im Recherchenbericht angeführtes Patentdokument | Datum der Veröffentlichung | Mitglied(er) der Patentfamilie | Datum der Veröffentlichung |
|---|---|---|---|
| US 8802265 B2 | 12-08-2014 | CA 2751982 A1 | 26-08-2010 |
| | | DE 102009009357 A1 | 02-09-2010 |
| | | DK 2399317 T3 | 27-04-2015 |
| | | EP 2399317 A1 | 28-12-2011 |
| | | ES 2539957 T3 | 07-07-2015 |
| | | JP 5468090 B2 | 09-04-2014 |
| | | JP 2012518247 A | 09-08-2012 |
| | | KR 20110126623 A | 23-11-2011 |
| | | KR 20140017017 A | 10-02-2014 |
| | | US 2012115069 A1 | 10-05-2012 |
| | | WO 2010094657 A1 | 26-08-2010 |
| JP 2021153048 A | 30-09-2021 | KEINE | |
| WO 2015025961 A1 | 26-02-2015 | JP 5864682 B2 | 17-02-2016 |
| | | JP 2015062177 A | 02-04-2015 |
| | | WO 2015025961 A1 | 26-02-2015 |
| US 2018135149 A1 | 17-05-2018 | CN 107848832 A | 27-03-2018 |
| | | EP 3466887 A1 | 10-04-2019 |
| | | JP 6640230 B2 | 05-02-2020 |
| | | JP WO2017208471 A1 | 14-06-2018 |
| | | TW 201806870 A | 01-03-2018 |
| | | US 2018135149 A1 | 17-05-2018 |
| | | WO 2017208471 A1 | 07-12-2017 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4786567 A
- US 7258947 B2
- US 9819039 B2
- US 6562514 B1
- US 10673090 B2
- US 6468688 B2

### In der Beschreibung aufgeführte Nicht-Patentliteratur

- **L. LI ; S. KIM ; W. WANG ; M. VIJAYAKUMAR ; Z. NIE ; BAOWEI CHEN ; J. ZHANG ; G. XIA ; J. HU ; G. GRAFF.** *Adv. Energy Mater.,* 2011, vol. 1, 394-400
- **M. VIJAYAKUMAR et al.** *Chem. Plus Chem.,* 2015, vol. 80, 428-437